# EUROPÄISCHE PATENTSCHRIFT

(11) **EP 1 835 265 B1**
(45) Veröffentlichungstag und Bekanntmachung des Hinweises auf die Patenterteilung: **05.11.2014**
(21) Anmeldenummer: 07010201.7
(22) Anmeldetag: 22.12.1997
(51) Int. Cl.: G01L 19/06, G01K 13/02, G01K 17/12, F04D 15/00, G01L 19/00, G01L 19/14, G01D 11/24, G05D 16/20

(54) **Sensoranordnung**
Sensor assembly
Dispositif de détection

(30) Priorität: 14.01.1997 DE 19700965
(43) Veröffentlichungstag der Anmeldung: 19.09.2007
(62) Teilanmeldung aus: 97122654.3
(73) Patentinhaber: GRUNDFOS A/S, DK-8850 Bjerringbro (DK)
(72) Erfinder: Jensen, Niels Due, 8850 Bjerringbro (DK); Schmidt, Jorgen, 9560 Hadsund (DK)
(74) Vertreter: Vollmann, Heiko

(56) Entgegenhaltungen:
- EP-A- 0 350 612
- EP-A1- 0 403 806
- DE-C1- 3 513 749
- DE-C1- 4 121 430
- US-A- 5 554 809

## Beschreibung

Die Erfindung betrifft ein Kreiselpumpenaggregat mit einer Sensoranordnung.

Drehzahlgeregelte Kreiselpumpenaggregate zählen heutzutage zum Stand der Technik. Insbesondere bei in Heizungsanlagen eingesetzten Umwälzpumpen dient die Drehzahlregelung dazu, die Pumpenleistung möglichst optimal an den jeweiligen Betriebszustand der Anlage anzupassen, einerseits um die Anlage möglichst energetisch günstig fahren zu können und andererseits um Strömungsgeräusche in der Anlage zu vermeiden. Während bei Pumpenaggregaten mit Radialrädern, insbesondere kleiner Bauart und vergleichsweise niedriger Drehzahl die Regelgröße (Drehzahl der Pumpe) durch Erfassung der elektrischen Größen des antreibenden Motors auf einfache Weise erfolgen kann, ist es bei Kreiselpumpenaggregaten größerer Leistung, höherer Drehzahl und insbesondere bei Pumpenaggregaten mit halb-axialem Laufrad erforderlich, hydraulische Größen der Pumpe zu erfassen, da in diesem Bereich die elektrischen Größen des antreibenden Motors sich nahezu drehzahlunabhängig verhalten. Eine solche Erfassung hydraulischer Größen ist deutlich aufwendiger und wird heutzutage in der Regel mit Hilfe eines externen Differenzdruckmessers durchgeführt, der über Leitungsverbindungen zwischen Druckstutzen und Saugstutzen der Pumpe angeschlossen wird. Eine solche Anordnung ist beispielsweise aus DE 39 23 027 Al bekannt.

Das Anbringen eines solchen externen Differenzdruckmessers ist aufwendig, da neben dem gesondert zu versorgenden elektronischen Gerät auch eine Verrohrung dorthin erfolgen muss. Diese Verrohrung ist nicht nur montageaufwendig, sondern auch empfindlich, da diese verhältnismäßig dünnen Rohre durch mechanische äußere Einflüsse leicht beschädigt werden können.

Darüber hinaus sind moderne frequenzumrichtergesteuerte Kreiselpumpenaggregate nicht nur drehzahlgeregelt, sondern auch in der Regelkennlinie variabel. Um die Regelkennlinie in zweckmäßiger Weise an den jeweiligen Betriebszustand der Anlage anzupassen hat es sich als zweckmäßig erwiesen, die Temperatur des zu fördernden Mediums zu erfassen. Dies kann durch einen gesonderten, beispielsweise innerhalb des Pumpengehäuses angeordneten Sensor erfolgen, was jedoch pumpengehäuseseitig entsprechende Änderungen mit sich bringt und darüber hinaus auch eine gesonderte Verdrahtung erforderlich macht.

Aus FR 2 691 802 ist ein kombinierter Temperaturdrucksensor bekannt, wie er beispielsweise bei Dieselmotoren, Turbinen, hydraulischen Aggregaten oder in der chemischen Industrie eingesetzt wird um sowohl den Druck als auch den der Temperatur eines Fluids zu erfassen.

Hiervon ausgehend liegt der Erfindung die Aufgabe zugrunde, ein Kreiselpumpenaggregat mit einer Sensoranordnung zu schaffen, die sowohl einen Differenzdrucksensor als auch einen Temperatursensor aufweist und die vorerwähnten Nachteile vermeidet.

Zur Lösung dieser Aufgabe sieht die Erfindung vor, einen Differenzdrucksensor und einen Temperatursensor in einem gemeinsamen Sensorgehäuse anzuordnen und dabei zumindest einen Teil des Sensorgehäuses so auszugestalten, dass er in das Pumpengehäuse eingliederbar ist. Dabei ist der Temperatursensor in dem zur Eingliederung in das Pumpengehäuse vorgesehenen Sensorgehäuseteil angeordnet und der Differenzdrucksensor über Kanäle kommunizierend mit Druckmeßanschlüssen verbunden, die in dem zur Eingliederung in das Pumpengehäuse vorgesehenen Sensorgehäuseteil liegen.

Eine solche Sensoranordnung ist besonders günstig, da sie in einem gemeinsamen Sensorgehäuse sowohl den Differenzdrucksensor als auch den Temperatursensor vorsieht, wobei der Temperatursensor in dem in das Pumpengehäuse eingliederbaren Sensorgehäuse liegt, so daß er möglichst pumpen- und somit fördermediumnah angeordnet ist. Der Differenzdrucksensor hingegen kann an geeigneter anderer Stelle im Sensorgehäuse, vorzugsweise außerhalb des Pumpengehäuses angeordnet sein und ist lediglich über kommunizierende Kanäle mit Druckmeßanschlüssen verbunden, die in dem zur Eingliederung in das Pumpengehäuse vorgesehenen Sensorgehäuseteil liegen.

Eine solche Anordnung ist auch deshalb besonders günstig, da pumpengehäuseseitig lediglich eine entsprechende Aufnahme für das Sensorgehäuse vorgesehen sein muß, in die wiederum Kanäle münden, die kommunizierend mit der Druck- bzw. Saugseite der Pumpe verbunden sind. Diese Kanäle liegen geschützt im Pumpengehäuse und werden bereits bei der Herstellung des Pumpengehäuses vorgesehen. Es entfallen also aufwendige Verrohrungen. Die für die erfindungsgemäße Sensoranordnung erforderliche pumpengehäuseseitige Ausbildung ist Gegenstand des DE-Patentes 195 44 173 C1, auf das hiermit ausdrücklich Bezug genommen wird.

Zwar ist es bei modernen in Halbleitertechnik aufgebauten Differenzdrucksensoren bekannt, diese mit einem Temperatursensor zu versehen, doch ist der dort eingesetzte Temperatursensor in keiner Weise geeignet, die Temperatur des Fördermediums zu erfassen, da er nämlich unmittelbar am Differenzdrucksensor angeordnet ist und lediglich zur Temperaturkompensation der Differenzdruckmessung dient. Der Temperatursensor im Sinne der Erfindung ist also ein gesonderter Temperatursensor und nicht der zur Temperaturkompensation am Differenzdrucksensor vorgesehene.

Der Erfindung liegt somit der Gedanke zugrunde, den für die Temperaturmessung des Fördermediums vorgesehenen Temperatursensor möglichst tief in das Pumpengehäuse einzugliedern, während der Differenzdrucksensor mit dem ggf. darauf befindlichen Temperatursensor möglichst außerhalb des Pumpengehäuses sitzen soll, um die empfindliche Halbleiterelektronik nicht den hohen Temperaturen des Pumpengehäuses aussetzen zu müssen. Andererseits sind jedoch beide Sensoren in einem gemeinsamen Sensorgehäuse angeordnet, was wesentliche Vorteile mit sich bringt. So ist pumpengehäuseseitig nur eine gemeinsame Aufnahme zur Eingliederung des Sensorgehäuses vorzusehen. Im übrigen ist eine gemeinsame Verkabelung, also eine gemeinsame Kabelführung vom Sensorgehäuse zur übrigen Pumpenelektronik möglich.

Von Vorteil ist es, wenn der zur Eingliederung in das Pumpengehäuse vorgesehene Sensorgehäuseteil einen im wesentlichen rotationssymmetrischen Vorsprung aufweist, der ein oder mehrere zylindrische oder konische Abschnitte aufweist und der in einer entsprechend ausgebildeten Bohrung des Pumpengehäuses dichtend einführbar ist, in der die Kanäle münden, die kommunizierend mit dem Druck- und dem Sauganschluß der Pumpe verbunden sind. Ein solch rotationssymmetrischer Vorsprung nach Art eines Zapfens oder abgestuften Zapfens ist einfach, beispielsweise durch einen O-Ring gegenüber der entsprechenden Aufnahmebohrung des Pumpengehäuses abzudichten und leicht zu montieren.

Bevorzugt ist der Differenzdrucksensor in dem außerhalb des Pumpengehäuses liegenden Sensorgehäuse angeordnet, um den Differenzdrucksensor weitgehend thermisch unabhängig vom Pumpengehäuse zu machen. Durch geeignete Kühlung, z. B. Verrippung des Sensorgehäuses kann der Differenzdrucksensor und die diesem zugeordnete, vorzugsweise innerhalb des Sensorgehäuses angeordnete Elektronik auf deutlich niedrigerem Temperaturniveau als das Pumpengehäuse gehalten werden, was zur Folge hat, daß kostengünstigere elektronische Bauteile eingesetzt werden bzw. die elektronischen Bauteile auch bei hoher Temperatur des Fördermediums und damit des Pumpengehäuses zuverlässig arbeiten.

Um das Sensorgehäuse zuverlässig und einfach am Pumpengehäuse anzubringen, ist ein flanschartiger Gehäuseteil vorgesehen, der sich an den Vorsprung anschließt und der Bohrungen zur Schraubbefestigung am Pumpengehäuse aufweist.

Das Sensorgehäuse ist vorteilhaft im wesentlichen aus drei Gehäuseteilen aufgebaut, die als Gußteile, beispielsweise Kunststoff-Spritzgußteile ausgebildet sind. Dabei ist der flanschartige Gehäuseteil mit dem Vorsprung als ein Gehäuseteil und der übrige, außerhalb des Pumpengehäuses liegende Gehäuseteil aus zwei Gehäusehälften gebildet, die unter Eingliederung des Anschlußkabels und diverse Einbauten miteinander verbunden und dann mit dem den Vorsprung und den flanschartigen Teil aufweisenden Gehäuseteil verbunden werden. Durch die einstückige Ausbildung des Vorsprunges und des flanschartigen Gehäuseteils wird erreicht, daß lediglich ein Gehäuseteil gegenüber dem Pumpengehäuse abzudichten ist. Es können also durch unterschiedliche Wärmedehnungen innerhalb des Sensorgehäuses keine Undichtigkeiten gegenüber dem Pumpengehäuse entstehen. Auch hat die Montage des Sensorgehäuses keinen Einfluß auf die Dichtigkeit des Anschlusses zum Pumpengehäuse.

Die beiden den übrigen Sensorgehäuseteil bildenden Gehäusehälften nehmen den Differenzdrucksensor, weitere elektronische Bauteile, beispielsweise eine dahinter angeordnete Platine sowie die Durchführung des Anschlußkabels auf. Zwar ist für die Funktion dieses kastenartigen Bauteils die Lage der Teilungsebene zwischen Gehäuse und Deckel bzw. zwischen den Gehäusehälften an und für sich frei wählbar, doch ist eine Anordnung der Teilungsebene quer zur Längsachse des Vorsprunges aus vielerlei Hinsicht von Vorteil. Neben der einfachen Montage der dazwischen einzugliedernden Bauteile ist vor allem die Möglichkeit hervorzuheben, die zwei Gehäusehälften identisch auszubilden, d. h. mit demselben Spritzgußwerkzeug herstellen zu können.

Der stirnseitige Anschluß der zwei Gehäusehälften an den flanschartigen Gehäuseteil mit dem daran angeformten Vorsprung ergibt eine besonders hohe Stabilität des Sensorgehäuses, da der flanschartige Gehäuseteil unmittelbar am Pumpengehäuse angebracht ist und somit die tragende Basis des Sensorgehäuses bildet. Bevorzugt ist dieser flanschartige Gehäuseteil mit kammernbildenden Zwischenwänden versehen, so daß sich ein Luftpolster zu dem übrigen Sensorgehäuse bildet, das die Wärmeleitung vom Pumpengehäuse ins Sensorgehäuse vermindert.

Um den Temperatursensor zur Ermittlung der Temperatur des zu fördernden Mediums möglichst nah an dieses heranzuführen, ist es zweckmäßig, den Temperatursensor nahe dem freien Ende des Vorsprunges anzuordnen. Ein unmittelbarer Kontakt des Temperatursensors mit dem zu fördernden Medium hat sich in der Praxis nicht als vorteilhaft erwiesen, da insbesondere beim Fördern von aggressiven Medien eine besondere Kapselung des Temperatursensors vorzusehen ist. Darüberhinaus ist die Abdichtung der Leitungsführung sicherzustellen. Insofern ist es wesentlich günstiger, den Temperatursensor innerhalb des Vorsprunges nahe dem freien Ende anzuordnen und das Sensorgehäuse zur druckdichten Kapselung zu nutzen, da dies ohnehin mit dem Fördermedium in Kontakt gebracht werden muß.

Nahe dem freien Ende des Vorsprunges sind zweckmäßigerweise auch die Druckmeßanschlüsse angeordnet. Bevorzugt werden die entsprechenden Kanalöffnungen nicht an der Stirnseite des Vorsprunges, sondern an seiner Umfangsfläche vorgesehen, und zwar um etwa 180° zueinander versetzt. Auf diese Weise ist eine gute Abdichtung und sicherere Leitungsverbindung gewährleistet.

Der Differenzdrucksensor selbst wird bevorzugt in eine Halterung eingegliedert und beidseitig durch Membranen geschützt. Diese mit Membranen versehene Halterung kann als gesonderte Baueinheit gefertigt werden, die dann bei der Montage des Sensorgehäuses entsprechend zwischen den Sensorgehäusehälften eingegliedert wird, genauso wie das dort eingeführte Anschlußkabel sowie die übrige Elektronik. Diese übrige Elektronik wird zweckmäßigerweise auf einer Anschlußplatine angeordnet, die quer zur Teilungsebene der Gehäusehälften formschlüssig zwischen diesen eingegliedert wird und die zum Anschluß des elektrischen Anschlußkabels einerseits und des Differenzdrucksensors sowie des Temperatursensors andererseits dient. Diese Platine bildet somit die Verdrahtungsbasis für alle Bauteile. Sie trägt neben der übrigen Elektronik die die Bauteile miteinander verbindenden Lötstellen. Diese Anschlußplatine liegt in dem Sensorgehäuseteil, der am weitesten vom Pumpengehäuse entfernt ist, so daß hier das niedrigste Temperaturniveau erreicht wird. Durch diese Anordnung können hier auch vergleichsweise temperaturempfindliche elektronische Bauelemente eingesetzt werden, die z. B. innerhalb des Pumpengehäuses temperaturbedingt nicht einsetzbar wären.

Um eine zuverlässige Abdichtung zwischen den Druckmeßanschlüssen am Vorsprung zur Bohrung des Pumpengehäuses hin zu gewährleisten, ist es von Vorteil, eine Dichtlippe am Vorsprung vorzusehen, die parallel zur Längsachse des Vorsprunges und quer über die freie Stirnseite verläuft. Auf diese Weise ist es nicht erforderlich, den gesamten Vorsprung und die entsprechende Gehäusebohrung mit hoher Paßgenauigkeit zu fertigen, da diese schmale Dichtlippe die erforderliche Abdichtung zwischen den Druckanschlüssen sicherstellt. Andererseits kann diese Dichtlippe gezielt unterbrochen sein oder ein anderer drosselartiger Kanal innerhalb des Vorsprunges gebildet sein, um einen Verbindungskanal zwischen den Druckanschlüssen zu bilden. Durch diesen Verbindungskanal kann eine gezielte Umströmung des Vorsprunges erreicht werden, um die Genauigkeit der Temperaturmessung des Fördermediums zu verbessern. Der hierdurch bedingte Teilrückfluß des geförderten Mediums vom Druckanschluß zum Sauganschluß muß in Kauf genommen werden, wird jedoch insbesondere bei größeren Kreiselpumpenaggregaten vernachlässigbar gering sein.

Die Erfindung ist nachfolgend anhand eines in der Zeichnung dargestellten Ausführungsbeispieles näher erläutert. Es zeigen:
- Fig. 1:: die erfindungsgemäße Sensoranordnung in vereinfachter Explosionsdarstellung und
- Fig. 2:: einen Längsschnitt durch die Sensoranordnung.

Die in den Figuren dargestellte und im folgenden beschriebene Sensoranordnung ist zur Verwendung mit einem Kreiselpumpenaggregat bestimmt, wie es beispielsweise in der deutschen Patentanmeldung 195 44 173.7 desselben Anmelders beschrieben ist, auf die zur Vermeidung von Wiederholungen hiermit ausdrücklich Bezug genommen wird und die als Anlage beigefügt ist.

Die Sensoranordnung weist einen Temperatursensor 1 und einen Differenzdrucksensor 2 auf, die in einem gemeinsamen Sensorgehäuse 3 angeordnet sind. Das Sensorgehäuse 3 besteht im wesentlichen aus drei Spritzgußteilen, nämlich einem zur Eingliederung in das Pumpengehäuse vorgesehenen vorderen Gehäuseteil 4 und zwei sich daran nach hinten anschließenden, einen Hohlraum bildenden Gehäusehälften 5, die identisch ausgebildet sind.

Der vordere Gehäuseteil 4 besteht aus einem zapfenförmig, an seinem freien Ende kegelförmig spitz auslaufenden Vorsprung 6, der im wesentlichen zylindrische Form hat und einem flanschartigen Teil 7, der sich rückseitig an den Vorsprung 6 anschließt. Der flanschartige Gehäuseteil 7 bildet die Montagebasis des gesamten Sensorgehäuses 3, mit der dieses am Pumpengehäuse festgelegt ist. Die beiden Gehäusehälften 5 werden unter Eingliederung der weiter unten noch im einzelnen beschriebenen Bauteile aufeinander gesetzt und durch zwei Bolzen 8 fest miteinander verbunden. Dieser so gebildete hintere Gehäuseteil wird dann über zwei weitere Bolzen 9 mit dem vorderen Gehäuseteil 4, insbesondere dem flanschartigen Teil 7 verbunden. Das so gebildete Sensorgehäuse 3 wird dann mit seinem Vorsprung 6 in eine entsprechende Aufnahmebohrung des Pumpengehäuses eingeführt, bis der flanschartige Teil 7 unter Eingliederung einer Dichtung an einer entsprechenden Planfläche des Pumpengehäuses anliegt. Die Befestigung erfolgt mit zwei Schrauben durch die im flanschartigen Teil 7 vorgesehenen Bohrungen 10.

Der Temperatursensor 1 sitzt nahe dem vorderen Ende des Vorsprunges 6 in einer zentralen inneren Ausnehmung 11 innerhalb des vorderen Gehäuseteils 4, die bis nahe zum freien Ende des Vorsprunges 6 reicht. Die Leitungsführung erfolgt ebenfalls durch diese zentrale Ausnehmung 11. Benachbart zu dieser zentralen Ausnehmung 11 sind zwei umgekehrt gerichtete äußere Ausnehmungen 12 in der Stirnseite des Vorsprunges 6 vorgesehen, die zur Reduzierung der Wandstärken in diesem Bereich dienen.

Benachbart zur zentralen Ausnehmung 11 sind innerhalb des Vorsprunges 6 zwei um 180° bezogen auf die Längsachse 13 des Vorsprunges 6 versetzt zueinander angeordnete Kanäle 14 vorgesehen, die in die Wandung durchsetzende Druckmeßanschlüsse 15 münden, die zu entsprechenden Kanalöffnungen in der Aufnahmebohrung des Pumpengehäuses fluchten, um auf diese Weise eine kommunizierende Verbindung zwischen Druckanschluß und Sauganschluß der Pumpe mit den Kanälen 14 zu schaffen. Die Kanäle 14 sind bis zum hinteren Ende des vorderen Gehäuseteils 4 hindurchgeführt, wo sie in einem stirnseitigen Kragen je einer Gehäusehälfte 5 münden, der über einen Kanal 16 mit einem Raum 17 verbunden ist, der durch eine formschlüssig zwischen den Gehäusehälften 5 eingegliederte Halterung 18 durchtrennt ist, welche den Differenzdrucksensor 2 trägt. Auf diese Weise ist der Differenzdrucksensor 2 kommunizierend mit dem Druck- bzw. Saugraum der Pumpe verbunden. Um die druckdichte Kanalführung zu gewährleisten sind die die Kanäle 16 führenden Kragen jeweils von einem O-Ring 19 umgeben, der beim Verschrauben des vorderen Gehäuseteils 4 mit dem hinteren Gehäuseteil zwischen den Stirnflächen dieser Gehäuseteile dichtend eingeklemmt wird.

Die Halterung 18 ist beidseitig durch je eine etwa hutförmige Membran 20, die in einen O-ringförmigen Außenwulst übergeht, abgedeckt. Diese Membranen 20 dichten den Differenzdrucksensor gegenüber den Druckräumen 17 ab, übertragen jedoch die dort anstehenden Drücke auf den Differenzdrucksensor 2, da der zwischen den Membranen 20 und dem Differenzdrucksensor 2 gebildete Freiraum mit einem druckübertragenden Gel gefüllt ist.

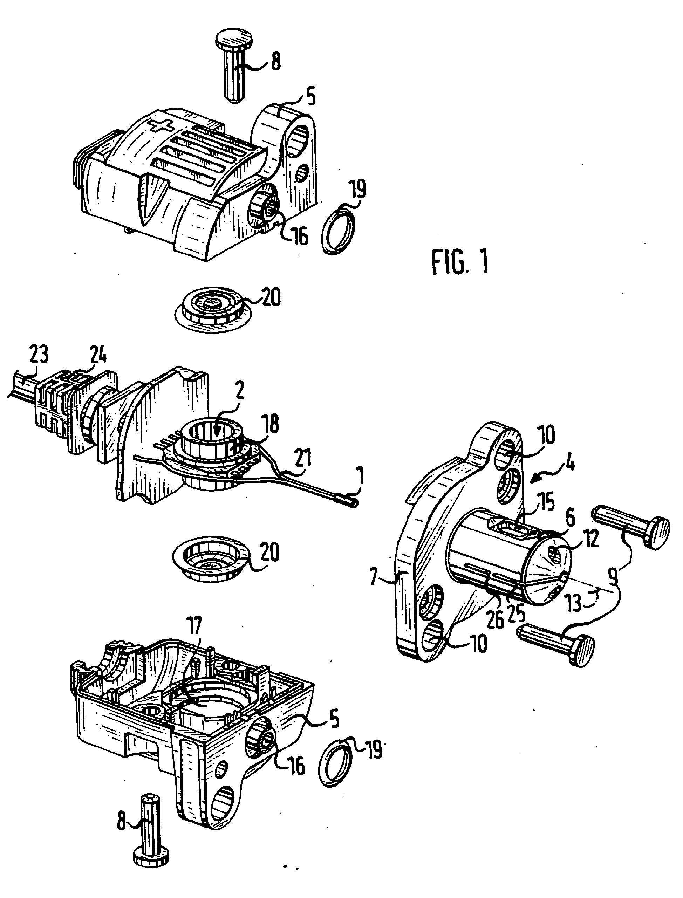

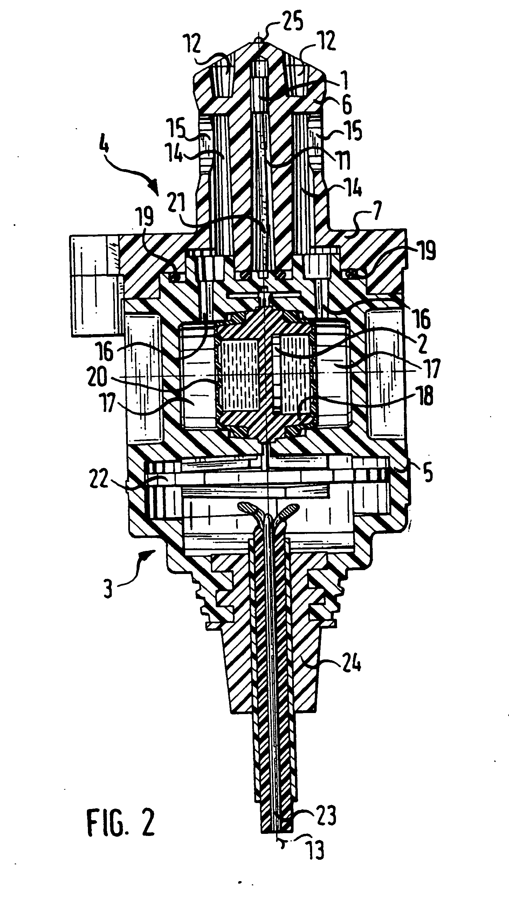

Wie anhand von Figur 2 dargestellt, ist die Halterung 18 mit den Membranen 20 formschlüssig zwischen den Gehäusehälften 5 eingegliedert. Die elektrischen Anschlußleitungen 21 zum Temperatursensor sind, wie in Figur 1 angedeutet, um die Halterung 18 herumgeführt und zusammen mit den starr aus der Halterung 18 herausgeführten elektrischen Anschlüssen des Differenzdrucksensors 2 zu einer dahinter und quer zur Teilungsebene der Gehäusehälften 5 liegenden Anschlußplatine 22 geführt, die weitere elektronische Bauteile trägt und an der auch die aus dem Sensorgehäuse 3 von rückseitig eingeführte Anschlußleitung 23 angeschlossen ist. Über diese Leitung 23 sind sämtliche elektrische Leitungsverbindungen nach außen gebildet. Da die zentrale Ausnehmung 11, in der die Leitungen 21 zum Temperatursensor 1 geführt sind, druckdicht gekapselt ist, können die darin geführten Leitungen auch ohne weitere Abdichtung vom vorderen Gehäuseteil 4 in den hinteren Gehäuseteil um die Halterung 18 herumgeführt werden. Die zu kapselnden möglicherweise druckführenden Bereiche liegen daneben.

Die Anschlußplatine 22 ist formschlüssig zwischen den Gehäusehälften 5 eingegliedert, genauso wie die Anschlußleitung 23, die in diesem Bereich mit einem an sich bekannten Zugentlastungs- und Knickschutzelement 24 versehen ist.

Der Vorsprung 6 weist eine Dichtlippe 25 auf, die im Bereich des zylindrischen Teils etwa parallel zur Längsachse 13 zu beiden Seiten verläuft und quer über die Stirnseite geführt ist. Diese Dichtlippe 25 dient zur Abdichtung der Druckmeßanschlüsse 15 gegenüber der Zylinderbohrung im Pumpengehäuse. Bei der anhand von Figur 1 dargestellten Ausführungsform weist diese Dichtlippe eine Unterbrechung 26 auf, die in Verbindung mit der entsprechenden Aufnahmebohrung im Pumpengehäuse eine Drosselstelle bildet und für eine volumenmäßig geringe, jedoch gezielte Umströmung des Vorsprunges 6 sorgt, um die Genauigkeit der Temperaturmessung zu erhöhen. Diese Unterbrechung kann ggf. durch eine entsprechende Bohrung ersetzt werden, oder, falls eine Umströmung nicht gewünscht ist, auch entfallen.

### Bezugszeichenliste

- 1 -: Temperatursensor
- 2 -: Differenzdrucksensor
- 3 -: Sensorgehäuse
- 4 -: Vorderer Gehäuseteil
- 5 -: Gehäusehälften
- 6 -: Vorsprung
- 7 -: Flanschartiger Teil
- 8 -: Bolzen
- 9 -: Bolzen
- 10 -: Bohrungen
- 11 -: Zentrale innere Ausnehmung
- 12 -: Äußere Ausnehmungen
- 13 -: Längsachse von 6
- 14 -: Kanäle
- 15 -: Druckmeßanschlüsse
- 16 -: Kanäle
- 17 -: Raum
- 18 -: Halterung
- 19 -: O-Ringe
- 20 -: Membranen
- 21 -: Leitungen
- 22 -: Anschlußplatine
- 23 -: Anschlußleitung
- 24 -: Zugentlastung, Knickschutz
- 25 -: Dichtlippe
- 26 -: Unterbrechung

## Patentansprüche

1. Kreiselpumpenaggregat mit einer Sensoranordnung mit folgenden Merkmalen:
- Es sind ein Differenzdrucksensor (2) und ein Temperatursensor (1) in einem gemeinsamen Sensorgehäuse (3) angeordnet, wobei das Sensorgehäuse (3) einen Sensorgehäuseteil (4) zur zumindest teilweisen Eingliederung in das Pumpengehäuse umfasst.
- Der Temperatursensor (1) sitzt in dem zur Eingliederung in das Pumpengehäuse vorgesehenen Sensorgehäuseteil (4).
- Der Differenzdrucksensor (2) ist über Kanäle (14, 16) kommunizierend mit Druckmessanschlüssen (15) verbunden, die in dem zur Eingliederung in das Pumpengehäuse vorgesehenen Sensorgehäuseteil (4) vorhanden sind, die zu entsprechenden Kanalöffnungen in der Aufnahmebohrung des Pumpengehäuses fluchten, die kommunizierend mit dem Druck- bzw. Sauganschluss der Pumpe verbunden sind.

2. Kreiselpumpenaggregat mit einer Sensoranordnung nach Anspruch 1, bei dem der zur Eingliederung in das Pumpengehäuse vorgesehene Sensorgehäuseteil (4) einen im wesentlichen rotationssymmetrischen Vorsprung (6) aufweist, der einen oder mehrere zylindrische und/oder konische Abschnitte aufweist und der in eine entsprechend ausgebildete Bohrung des Pumpengehäuses dichtend einführbar ist.

3. Kreiselpumpenaggregat mit einer Sensoranordnung nach Anspruch 1 oder 2, bei dem der Differenzdrucksensor (2) in dem außerhalb des Pumpengehäuses liegenden Sensorgehäuseteil (5) angeordnet ist.

4. Kreiselpumpenaggregat mit einer Sensoranordnung nach einem der vorhergehenden Ansprüche, bei dem sich an den Vorsprung ein flanschartiger Gehäuseteil (7) anschließt, mit dem das Sensorgehäuse (3) am Pumpengehäuse vorzugsweise schraubbefestigbar ist.

5. Kreiselpumpenaggregat mit einer Sensoranordnung nach einem der vorhergehenden Ansprüche, bei dem das Sensorgehäuse (3) im Wesentlichen aus drei Gussteilen (4, 5) besteht, und zwar einem den flanschartigen Gehäuseteil (7) und den Vorsprung (6) umfassenden Gehäuseteil (4) sowie zwei Gehäusehälften (5), die das übrige außerhalb des Pumpengehäuses liegende Sensorgehäuse bilden.

6. Kreiselpumpenaggregat mit einer Sensoranordnung nach einem der vorhergehenden Ansprüche, bei dem die Teilungsebene der Gehäusehälften (5) etwa quer zur Längsachse (13) des Vorsprunges (6) angeordnet ist.

7. Kreiselpumpenaggregat mit einer Sensoranordnung nach einem der vorhergehenden Ansprüche, bei dem der flanschartige Gehäuseteil (7) stirnseitig an die Gehäusehälften (5) anschließt.

8. Kreiselpumpenaggregat mit einer Sensoranordnung nach einem der vorhergehenden Ansprüche, bei dem der Temperatursensor (1) nahe dem freien Ende des Vorsprunges (6) angeordnet und durch das Sensorgehäuse (3) druckdicht gekapselt ist.

9. Kreiselpumpenaggregat mit einer Sensoranordnung nach einem der vorhergehenden Ansprüche, bei dem die Druckmessanschlüsse (15) nahe dem freien Ende des Vorsprunges (6) durch Kanalöffnungen auf der Umfangsfläche gebildet sind, die etwa um 180° versetzt zueinander angeordnet sind.

10. Kreiselpumpenaggregat mit einer Sensoranordnung nach einem der vorhergehenden Ansprüche, bei dem der Differenzdrucksensor (3) beidseitig durch Membranen (20) geschützt in einer zwischen den Gehäusehälften (5) formschlüssig und dicht zusammen mit diesem eingegliederten Halterung (18) angeordnet ist.

11. Kreiselpumpenaggregat mit einer Sensoranordnung nach einem der vorhergehenden Ansprüche, bei dem an der vom Vorsprung (6) abgewandten Seite die elektrische Anschlussleitung (23) in das Sensorgehäuse (3) eingeführt ist.

12. Kreiselpumpenaggregat mit einer Sensoranordnung nach einem der vorhergehenden Ansprüche, bei dem die elektrische Anschlussleitung (23) innerhalb des Sensorgehäuses (3) zu einer Anschlussplatine (22) geführt ist, die zwischen den Gehäusehälften (5) formschlüssig eingegliedert und etwa quer zur Teilungsebene der Gehäusehälften (5) angeordnet ist.

13. Kreiselpumpenaggregat mit einer Sensoranordnung nach einem der vorhergehenden Ansprüche, bei dem der Vorsprung (6) eine Dichtlippe (25) aufweist, die parallel zur Längsachse (13) des Vorsprunges (6) und quer über die freie Stirnseite verläuft.

14. Kreiselpumpenaggregat mit einer Sensoranordnung nach einem der vorhergehenden Ansprüche, bei dem innerhalb des Vorsprunges (6) oder zwischen Vorsprung (6) und Pumpengehäuse ein die Saug-mit der Druckseite verbindender Kanal (26) gebildet ist.

## Claims

1. A centrifugal pump assembly with a sensor arrangement with the following features:
- A differential pressure sensor (2) and a temperature sensor (1) are arranged in a common sensor housing (3), wherein the sensor housing (3) comprises a sensor housing part (4) for the at least partial integration into the pump housing.
- the temperature sensor (1) is seated in the sensor housing part (4) envisaged for integration into the pump housing.
- the differential pressure sensor (2) is communicatingly connected via channels (14, 16) to pressure measurement connections (15), said channels being provided in the sensor housing part (4) envisaged for integration into the pump housing, being aligned to corresponding channel openings in the receiving bore of the pump housing and being communicatingly connected to the pressure or suction connection of the pump.

2. Centrifugal pump assembly with a sensor arrangement according to claim 1, wherein the sensor housing part (4) provided for incorporation into the pump housing comprises an essentially rotationally symmetrical projection (6) which has one or more cylindrical and/or conical sections and which may be sealingly introduced into a correspondingly formed bore of the pump housing.

3. Centrifugal pump assembly with a sensor arrangement according to claim 1 or 2, wherein the differential pressure sensor (2) is arranged in the sensor housing part (5) lying outside the pump housing.

4. Centrifugal pump assembly with a sensor arrangement according to one of the preceding claims, wherein a flange-like housing part (7) connects to the projection, with which housing part the sensor housing (3) may be preferably screw-fastened on the pump housing.

5. Centrifugal pump assembly with a sensor arrangement according to one of the preceding claims, wherein the sensor housing (3) consist essentially of three cast parts (4, 5), and specifically of a housing part (4) comprising the flange-like housing part (7) and the projection (6), as well as two housing halves (5) which form the remaining sensor housing lying outside the pump housing.

6. Centrifugal pump assembly with a sensor arrangement according to one of the preceding claims, wherein the parting plane of the housing halves (5) is roughly transverse to the longitudinal axis (13) of the projection (6).

7. Centrifugal pump assembly with a sensor arrangement according to one of the preceding claims, wherein the flange-like housing apart (7) connects to the housing halves (5) at the end-side.

8. Centrifugal pump assembly with a sensor arrangement according to one of the preceding claims, wherein the temperature sensor (1) is arranged close to the free end of the projection (6) and is encapsulated in a pressure-tight manner by the sensor housing (3).

9. Centrifugal pump assembly with a sensor arrangement according to one of the preceding claims, wherein the pressure measurement connections (15) are formed close to the free end of the projection (6) by channel openings on the peripheral surface, which are arranged offset to one another by about 180°.

10. Centrifugal pump assembly with a sensor arrangement according to one of the preceding claims, wherein the differential pressure sensor (3) is arranged in a holder (18) with a positive fit between the housing halves (5) and incorporated together with these in a sealed manner, protected on both sides by membranes (20).

11. Centrifugal pump assembly with a sensor arrangement according to one of the preceding claims, wherein the electrical connection conduit (23) is introduced into the sensor housing (3) on the side distant to the projection (6).

12. Centrifugal pump assembly with a sensor arrangement according to one of the preceding claims, wherein the electrical connection conduit (23) is led within the sensor housing (3) to a connection circuit board (22) which is incorporated between the housing halves (5) with a positive fit and is arranged roughly transversely to the parting plane of the housing halves (5).

13. Centrifugal pump assembly with a sensor arrangement according to one of the preceding claims, wherein the projection (6) comprises a sealing lip (25) which runs parallel to the longitudinal axis (13) of the projection (6) and transversely over the free end-side.

14. Centrifugal pump assembly with a sensor arrangement according to one of the preceding claims, wherein a channel (26) connecting the suction side to the pressure side is formed within the projection (6) or between the projection (6) and the pump housing.

## Revendications

1. Groupe motopompe centrifuge à système de capteurs comportant les caractéristiques suivantes :
- un capteur de pression différentielle (2) et un capteur de température (1) sont disposés dans un boîtier de capteurs (3) commun, le boîtier de capteurs (3) comprenant une partie de boîtier de capteurs (4) destinée à être incorporée au moins partiellement dans le carter de pompe ;
- le capteur de température (1) est logé dans la partie de boîtier de capteurs (4) prévue pour être incorporée dans le carter de pompe ;
- le capteur de pression différentielle (2) est relié de manière communicante, via des canaux (14, 16), à des raccords de mesure de pression (15) qui sont logés dans la partie de boîtier de capteurs (4) prévue pour être incorporée dans le carter de pompe, sont alignés sur des orifices de canaux correspondants dans l'alésage de réception du carter de pompe et communiquent avec le raccord de refoulement ou d'aspiration de la pompe.

2. Groupe motopompe centrifuge à système de capteurs selon la revendication 1, dans lequel la partie de boîtier de capteurs (4) prévue pour être incorporée dans le carter de pompe présente une partie en saillie (6) essentiellement à symétrie de rotation comportant un ou plusieurs segments cylindriques et/ou coniques et pouvant être introduite de manière étanche dans un alésage du carter de pompe conformé de manière correspondante.

3. Groupe motopompe centrifuge à système de capteurs selon la revendication 1 ou 2, dans lequel le capteur de pression différentielle (2) est disposé dans la partie de boîtier de capteurs (5) située à l'extérieur du carter de pompe.

4. Groupe motopompe centrifuge à système de capteurs selon l'une des revendications précédentes, dans lequel se raccorde à la partie en saillie une partie de boîtier (7) en forme de bride permettant, de préférence, de visser le boîtier de capteurs (3) au carter de pompe.

5. Groupe motopompe centrifuge à système de capteurs selon l'une des revendications précédentes, dans lequel le boîtier de capteurs (3) est essentiellement constitué de trois pièces moulées (4, 5), à savoir une partie de boîtier (4) comprenant la partie de boîtier (7) en forme de bride et la partie en saillie (6) ainsi que deux demi-boîtiers (5) formant la partie restante du boîtier de capteurs située à l'extérieur du carter de pompe.

6. Groupe motopompe centrifuge à système de capteurs selon l'une des revendications précédentes, dans lequel le plan de division des demi-boîtiers (5) se situe approximativement transversalement à l'axe longitudinal (13) de la partie en saillie (6).

7. Groupe motopompe centrifuge à système de capteurs selon l'une des revendications précédentes, dans lequel la partie de boîtier (7) en forme de bride se raccorde côté frontal aux demi-boîtiers (5).

8. Groupe motopompe centrifuge à système de capteurs selon l'une des revendications précédentes, dans lequel le capteur de température (1) est disposé à proximité de l'extrémité libre de la partie en saillie (6) et est encapsulé de manière étanche à la pression par le boîtier de capteurs (3).

9. Groupe motopompe centrifuge à système de capteurs selon l'une des revendications précédentes, dans lequel les raccords de mesure de pression (15) sont formés à proximité de l'extrémité libre de la partie en saillie (6) sur la surface périphérique par des orifices de canaux décalés d'environ 180° les uns par rapport aux autres.

10. Groupe motopompe centrifuge à système de capteurs selon l'une des revendications précédentes, dans lequel le capteur de pression différentielle (3), protégé des deux côtés par des membranes (20), est disposé dans un support (18) incorporé par complémentarité de forme entre les demi-boîtiers (5) et formant un joint hermétique avec celui-ci.

11. Groupe motopompe centrifuge à système de capteurs selon l'une des revendications précédentes, dans lequel le câble de raccordement électrique (23) est introduit dans le boîtier de capteurs (3) du côté opposé à la partie en saillie (6).

12. Groupe motopompe centrifuge à système de capteurs selon l'une des revendications précédentes, dans lequel le câble de raccordement électrique (23) à l'intérieur du boîtier de capteurs (3) est guidé jusqu'à une platine de raccordement (22) incorporée par complémentarité de forme entre les demi-boîtiers (5) et disposée approximativement transversalement au plan de division des demi-boîtiers (5).

13. Groupe motopompe centrifuge à système de capteurs selon l'une des revendications précédentes, dans lequel la partie en saillie (6) présente une lèvre d'étanchéité (25) s'étendant parallèlement à l'axe longitudinal (13) de la partie en saillie (6) et transversalement sur le côté frontal libre.

14. Groupe motopompe centrifuge à système de capteurs selon l'une des revendications précédentes, dans lequel, à l'intérieur de la partie en saillie (6) ou entre la partie en saillie (6) et le carter de pompe, est formé un canal (26) reliant le côté aspiration au côté refoulement.
